# FASCICULE DE BREVET EUROPEEN

(11) **EP 1 354 845 B1**
(45) Date de publication et mention de la délivrance du brevet: **21.06.2006**
(21) Numéro de dépôt: 03290881.6
(22) Date de dépôt: 09.04.2003
(51) Int. Cl.: B66F 9/08, B62B 3/06

(54) **Chariot de manutention**
Flurförderzeug
Industrial truck

(30) Priorité: 15.04.2002 FR 0204700; 13.12.2002 FR 0215814
(43) Date de publication de la demande: 22.10.2003
(73) Titulaire: M L M, 95310 Saint Ouen L'Aumone (FR)
(72) Inventeur: Quentin, Luc, 95350 Saint Brice sous Foret (FR)
(74) Mandataire: Lepeudry-Gautherat, Thérèse

(56) Documents cités:
- DE-A- 19 807 849
- DE-B- 1 197 386
- DE-U- 20 208 770
- GB-A- 2 146 616
- GB-A- 2 292 730
- US-A- 6 125 971

## Description

La présente invention concerne la manutention de charges.

La manutention de charges peut s'effectuer au moyen d'un mécanisme destiné à soulever légèrement du sol des charges, par exemple des palettes de marchandises, afin de les transporter un peu plus loin. Pour le transport à une certaine distance, le mécanisme est monté sur un véhicule, par exemple un chariot. Un tel chariot de manutention de charges est divulgué dans le document DE-B-11 97 386 composant toutes les caractéristiques de l'objet du préambule de la revendication 1.

Le chariot comporte un bâti, porté par une roue directrice et motrice commandée par un timon, bâti solidaire de deux longerons longitudinaux antérieurs d'appui au sol, dont les extrémités libres sont montées sur des roulettes.

Dans la zone au-dessus des deux longerons s'étend un outil de manutention, par exemple les deux branches d'une fourche destinée à porter une palette à déplacer. A cet effet, le chariot est avancé pour que les deux longerons et les deux branches de fourche s'engagent sous la palette, puis la fourche est légèrement translatée verticalement par un mécanisme actionneur pour décoller du sol la palette. Dans un autre exemple, ce peut être un rostre sur lequel s'empale une bobine de fil électrique ou encore un rouleau de papier ou autre.

La translation soulevant l'outil peut en particulier s'effectuer au moyen d'un mécanisme dit à ciseaux disposé transversalement à l'arrière du bâti. Les ciseaux sont en fait deux longerons mutuellement couplés à mi-longueur, en X, par un axe d'articulation. Un vérin commande le rapprochement des deux extrémités basses des deux branches du X et provoque ainsi la montée des deux extrémités hautes, couplées à la fourche.

Un tel mécanisme à ciseaux offre ainsi une certaine plage ou dynamique de réglage en hauteur de la fourche, pour poser les palettes non plus au sol mais sur des supports en hauteur. Toutefois, la dynamique de réglage en hauteur est limitée, car, le X, en position basse, aplatie, ne doit pas déborder latéralement du bâti.

La présente invention vise à proposer un mécanisme permettant de soulever une charge en s'affranchissant de la limitation de la course en hauteur de l'outil, fourche ou autre.

A cet effet, la présente invention concerne un chariot de manutention de charges comportant un bâti, muni de moyens d'appui stable au sol, et comportant un outil mobile, de support d'une charge, commandé par des moyens d'entraînement en déplacement vertical, en fonctionnement, caractérisé par le fait que l'outil comporte des moyens de guidage en translation sur un mât de guidage, sous l'action des moyens d'entraînement.

Ainsi, il est prévu, en plus des moyens d'entraînement, des moyens de guidage ou coulissement, alors que, dans l'art antérieur, le X des ciseaux intégrait la fonction de transmission de l'entraînement vertical et de maintien de la fourche dans la position relative voulue en vue de dessus.

Selon la présente invention, le guidage assure le maintien ci-dessus dans la position voulue en vue de dessus, si bien qu'il est possible de choisir un moyen d'entraînement permettant d'obtenir toute longueur de course voulue, en prévoyant un mât de longueur adaptée.

Dans une forme de réalisation avantageuse, les moyens d'entraînement comportent un lien souple, s'étendant sensiblement parallèlement au mât, de traction en soulèvement des moyens de guidage en translation, et par exemple comportent une poulie de renvoi du lien souple.

Le lien souple peut en particulier relier les moyens de coulissement à un point fixe du bâti et l'axe de la poulie de renvoi est monté à une extrémité supérieure libre d'un vérin, de réglage de la hauteur de la fourche, à course sensiblement parallèle à une direction d'extension du mât.

Le lien souple peut en particulier relier les moyens de guidage en translation à un point fixe du bâti et l'axe de la poulie de renvoi peut être monté à une extrémité supérieure libre d'un vérin, de réglage de la hauteur de l'outil, à course sensiblement parallèle à une direction d'extension du mât.

Les moyens d'entraînement peuvent, dans une variante, comporter un vérin, s'étendant sensiblement parallèlement au mât, d'entraînement direct des moyens de coulissement.

Dans une forme de réalisation, les moyens de guidage de l'outil sont reliés au reste de l'outil par une liaison comportant deux voiles parallèles et espacés latéralement.

Selon une forme de réalisation préférée, le mât s'étend sensiblement verticalement selon un plan longitudinal médian du chariot.

Il peut être prévu un timon de commande d'une roue directrice, monté rotatif sur un palier porté par un support de déport latéral par rapport au mât.

Dans une forme de réalisation avantageuse, le mât comporte deux glissières jumelées à section transversale présentant une forme sensiblement en "C", dont deux surfaces de branches opposées, respectivement avant et arrière, constituent des pistes de guidage des moyens de guidage de l'outil.

Les pistes de guidage peuvent être internes ou externes au mât.

L'une au moins des branches d'au moins l'un des "C" se prolonge de préférence par une section d'un appendice raidisseur s'étendant sensiblement parallèlement à un plan médian du chariot, l'appendice raidisseur étant de préférence monobloc avec le "C" et s'étendant avantageusement dans une direction opposée à l'outil.

L'inertie de résistance du mât à la flexion vers l'avant sous l'effet de la charge est ainsi accrue par l'augmentation de la taille de la section transversale du mât dans la direction avant-arrière, c'est-à-dire celle de la charge.

Dans une forme préférée, les deux sections en "C" se prolongent par respectivement deux sections d'appendices raidisseurs reliés ensemble par une pluralité d'entretoises mutuellement espacées. L'une des entretoises peut comporter ledit point fixe pour le lien souple.

Il peut être prévu un tablier arrière recouvrant l'appendice raidisseur et éventuellement relié à l'appendice pour en augmenter l'inertie mécanique.

Dans une forme préférée de réalisation, le mât comporte un canal de passage du lien souple et peut même constituer un canal de logement d'un vérin des moyens d'entraînement.

Le mât peut en outre porter un pupitre monté rotatif.

Dans une forme de réalisation, l'outil est une fourche de transport de palettes.

L'invention sera mieux comprise à l'aide de la description détaillée suivante d'une forme de réalisation d'un chariot de manutention de charges selon l'invention, en référence au dessin annexé, sur lequel :
- la figure 1 est une vue en perspective avant gauche du chariot,
- la figure 2 est une vue en perspective des chariot depuis l'arrière droit,
- la figure 3 représente plus en détails, en coupe transversale, un mât associé à la fourche, et
- la figure 4 est une vue latérale schématique illustrant le principe de fonctionnement d'une mécanique à vérin de soulèvement de la fourche.

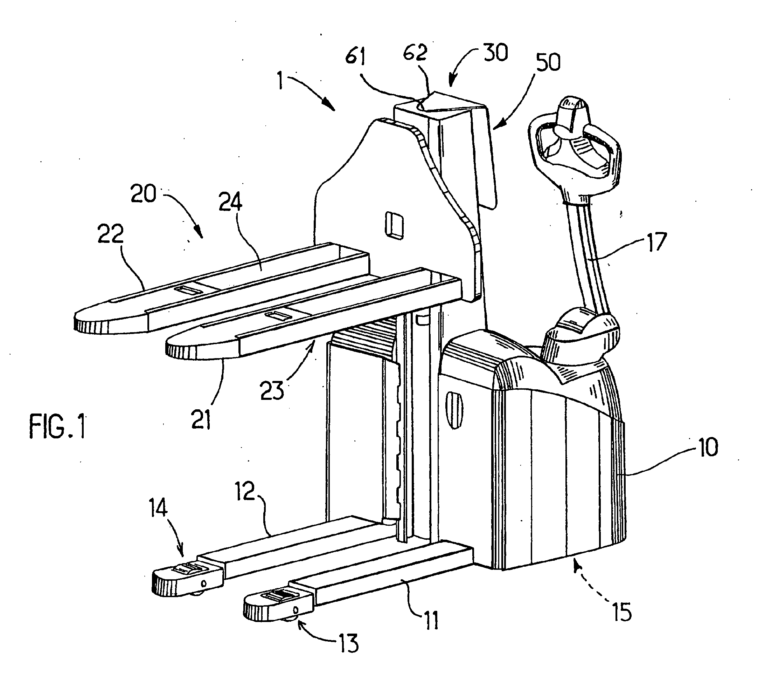

Le chariot de manutention de charges 1 représenté sur la figure 1 comporte un corps de bâti ou châssis 10 muni de deux pattes ou longerons antérieurs parallèles et latéraux 11, 12 d'appui stable au sol. Chaque longeron 11, 12 comporte, dans la zone d'extrémité libre antérieure, une roulette respective de support et de déplacement 13, 14. Le corps du bâti 10 comporte une roue arrière 15 de support et de direction, dont la direction de braquage est commandée par un timon 17, articulé dans cet exemple. Les roues ou roulettes 13, 14, 15 sont disposées selon les sommets d'un triangle assurant la stabilité voulue en roulis et tangage, c'est-à-dire essentiellement en basculement vers l'avant sous le poids d'une charge. Dans ce exemple, il s'agit de porter une palette chargée, au moyen d'un outil qui est ici une fourche de transport 20 à deux bras ou branches 21, 22.

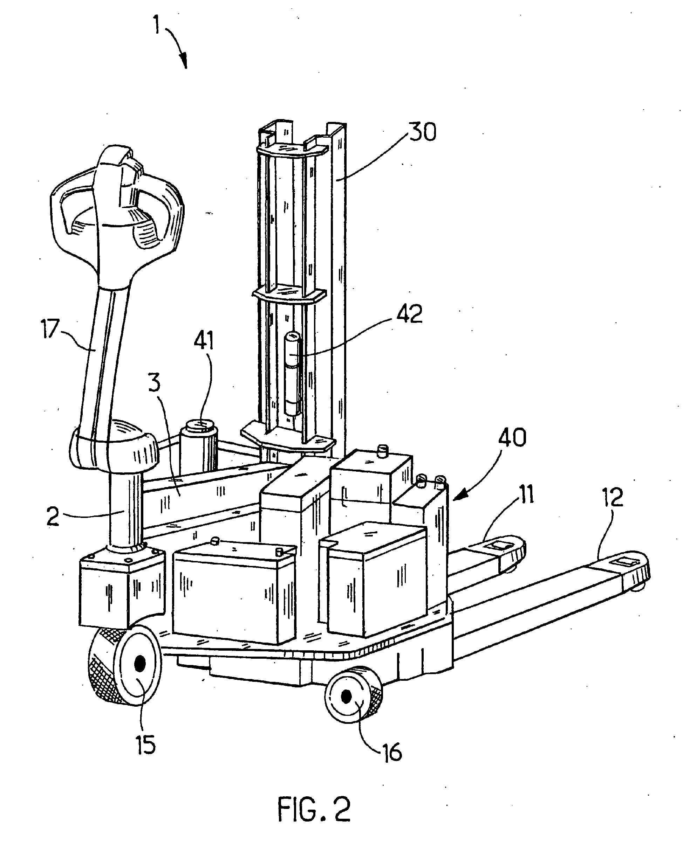

Toutefois ici, du fait de la présence d'un mât central 30 (dont la fonction est expliquée plus loin) axé selon un plan médian du chariot 1, le timon 17 et la roue directrice 15 située dessous sont décalés latéralement, ici vers la gauche, sensiblement dans le prolongement du longeron 11, afin que le champ de vision panoramique du conducteur ne soit pas limité. Les roues ou roulettes 13, 14, 15 forment ainsi les sommets de sensiblement un triangle rectangle. Pour élargir le polygone de sustentation ainsi défini, une roulette stabilisatrice 16 (fig. 2), montée libre en rotation de braquage, est disposée à droite du corps 10, dans une position arrière symétrique de celle de la roue 15 pour former au total un trapèze de sustentation sensiblement de forme rectangulaire. Les longerons 11, 12 présentent une certaine flexibilité, de façon à ce que le chariot 1 puisse prendre un léger gauchissement afin de rester en appui par ses quatre roues ou roulettes 13 à 16 même en cas d'inégalité du sol.

Comme le montre la figure 2, le timon 17 est monté libre en rotation, autour d'un axe vertical, sur un palier 2 du châssis 10. Un longeron ou poutrelle horizontal 3, de déport latéral du timon 17, comporte un tronçon, ici d'extrémité, pourvu d'éléments de fixation du pied du mât 30, tels que des lumières de réception de boulons de montage du mât 30, ou encore des goujons ou des pattes de réception, ou une zone de soudage du mât 30, et l'extrémité opposée porte le palier 2 du timon 17. Le mât 30, central comme ici ou lui-même déporté latéralement en variante, ne gêne ainsi pas la vue vers l'avant de l'opérateur conduisant le chariot 1.

Dans un but de clarté de l'exposé, les roues 13 à 16 du chariot 1 sont ici supposées reposer sur un sol horizontal, c'est-à-dire en position fonctionnelle classique. Les explications d'orientation des éléments constitutifs du chariot 1 par rapport à la verticale ou l'horizontale sont donc fondées sur cette hypothèse. La généralité de l'exposé de l'invention ne doit donc pas être considérée comme limitée par cette hypothèse.

Les deux branches de la fourche 20 s'étendent horizontalement vers l'avant, au-dessus des longerons 11, 12 d'appui au sol, et présentent sensiblement la même longueur que ceux-ci.

Dans cet exemple, les branches de fourche 21 et 22 s'étendent légèrement plus en avant que les longerons d'appui 11, 12 et présentent chacune, en vue de dessus, une découpe ou lumière allongée 23, 24 de taille correspondant à la section du longeron 11, 12 situé à la verticale de la branche considérée 21, 22. Cette complémentarité de formes de section permet, comme expliqué plus loin, d'abaisser la fourche 20 jusqu'à pratiquement toucher le sol, sans que les longerons 11, 12 constituent un obstacle à la descente.

On rappellera qu'une palette de support de marchandises comporte un plan supérieur de pose des marchandises, constitué d'une série de lattes voisines qui reposent sur en général trois tasseaux équirépartis, s'étendant perpendiculairement aux lattes et de section suffisante en hauteur pour que les longerons 11, 12 et les branches 21, 22 puissent être glissés sous les lattes. Les longerons d'appui 11, 12 présentent une occupation en hauteur, par rapport au sol, sensiblement égale à l'épaisseur des branches 21, 22.

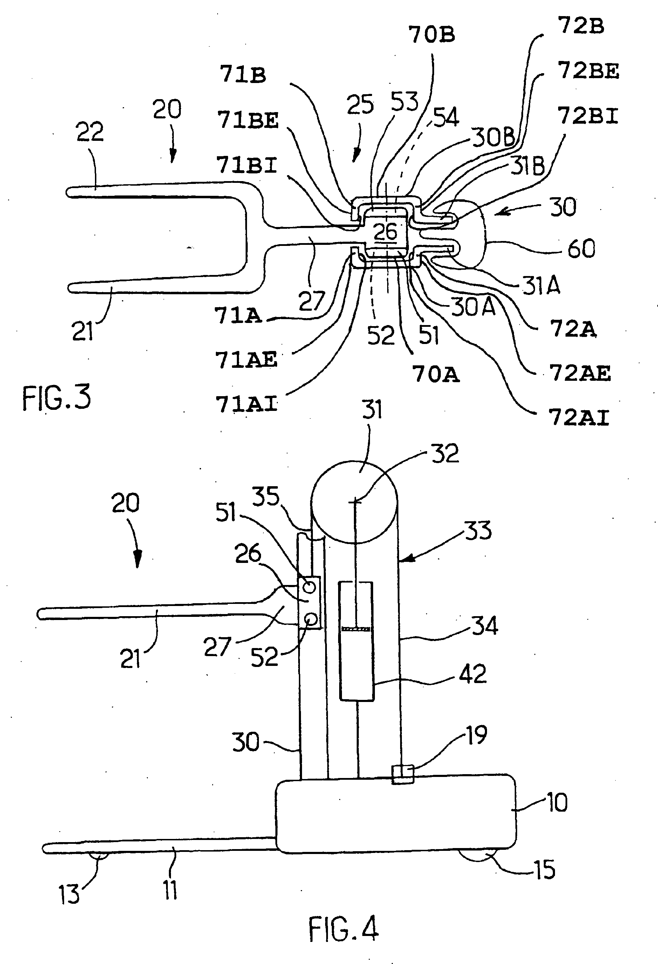

Comme le montrent les figures 3 et 4, la fourche 20 comporte une partie de corps 25 reliant mutuellement les branches 21, 22. Le corps de fourche 25 comporte une coulisse 26 qui coopère avec le mât 30 du châssis 10, assurant le guidage en coulissement du corps 25 et donc de la fourche 20.

Le mât 30 présente, dans cet exemple, une section transversale présentant une partie fonctionnelle de guidage sensiblement en forme de deux C opposés, ouverts l'un vers l'autre, c'est-à-dire constitue une sorte de tube comportant une fente, ici avant, à extension axiale. Plus précisément, le mât représenté 30 est ici constitué par assemblage de deux cornières ou profilés 30A, 30B en regard (fig. 3) à section transversale sensiblement en "C cédille", c'est-à-dire sensiblement en forme d'un rectangle, comportant un grand côté externe 70A, respectivement 70B, parallèle au plan médian, et deux petits côtés ou branches avant et arrière respectivement 71A, 71B et 72A, 72B, s'étendant transversalement. Chaque rectangle est toutefois ouvert sur le long côté interne en regard de son homologue, comme si le côté avait glissé vers l'arrière du chariot 1, parallèlement au plan médian du chariot 1, pour former un appendice raidisseur 31A, 31B recevant une pluralité d'ici trois pattes ou plaques entretoises arrière, comme celle référencée 60, de liaison avec son homologue de l'autre profilé, espacées axialement selon la hauteur du mât 30. Il s'agit donc de deux glissières 30A, 30B opposées, jumelées, qui emprisonnent radialement la coulisse 26. En variante ou en complément, les branches avant 71A, 71B des deux C peuvent se poursuivre par des appendices raidisseurs formant dans cet exemple des toiles, du type des appendices arrière 31A, 31B, mais prolongeant la surface avant 71A, 71B des C, c'est-à-dire s'étendant vers l'avant. Les appendices avant peuvent de même être mutuellement reliés par des plaques ou entretoises équivalentes 60, mais uniquement à leurs extrémités, haute et basse, afin de ne pas bloquer la translation verticale de la fourche 20. Dans une configuration minimale, non optimale, il peut n'être prévu qu'un seul raidisseur, 31A ou 31B, arrière ou avant. En pareil cas, les "C" sont reliés au niveau de leur branche arrière 72A, 72B, c'est-à-dire à la base du raidisseur 31A ou 31B.

La coulisse 26, d'extrémité arrière de la fourche 20, coopère ainsi avec le mât tubulaire 30 et présente à cet effet une section transversale, c'est-à-dire horizontale en fonctionnement, complémentaire de la forme interne du mât 30 dans lequel elle est ici logée. La coulisse 26 présente une dimension en hauteur suffisante (fig. 4) pour résister au couple de torsion que représente le poids de la charge de la palette, s'exerçant à une certaine distance horizontale du mât 30.

La coulisse 26 se prolonge radialement par un bras 27 de liaison avec les deux branches de la fourche 20, bras 27 faisant saillie par la fente séparant les deux glissières 30A, 30B du mât 30.

La coulisse 26 coopérant avec le mât 30 est guidée en translation au moyen de deux paires latéralement opposées 51, 52 et 53, 54 de galets superposés, qu'elle porte dans cet exemple, seule la paire de gauche 51, 52 étant visible sur la figure 4. Le poids de la charge sur la fourche 20 induit un couple de flexion vers l'avant sur le mât 30. Comme indiqué, l'appendice 31A, 31B s'étend sensiblement parallèlement au plan médian du chariot 1, c'est-à-dire qu'il prolonge la partie de guidage en forme de C dans la direction vers l'arrière, donc opposée à la direction avant de la fourche 20, pour ainsi augmenter l'inertie mécanique du mât 30 et donc augmenter le couple de résistance à la flexion vers l'avant. Les appendices 31A et 31B travaillent donc à l'extension en présence d'une palette chargée.

Les deux branches opposées, d'extrémité avant 71A, 71B et arrière 72A, 72B, de chaque C servent de piste de guidage d'appui des deux paires respectives de galets 51, 52 ou 53, 54, pour résister au couple de flexion vers l'avant dû à la charge. Les deux branches opposées d'extrémité, avant 71A, 71B et arrière 72A, 72B, de chaque C comportent chacune deux surfaces internes en regard 71AI, 71BI et 72AI, 72BI, tournées respectivement vers l'arrière et vers l'avant, de roulement des galets 51, 52 et respectivement 53, 54, qui transmettent le couple de flexion au mât 30. L'appendice 31A, 31B constitue une sorte de toile de rigidification à extension dans un plan sensiblement parallèle au plan médian du chariot 1, et s'oppose ainsi à la flexion dans le plan médian. L'appendice 31A, 31B est en outre solidarisé aux plaques comme 60, par exemple par soudage, sur l'une au moins de ses deux surfaces longitudinales, externe ou interne.

L'énergie motrice est ici fournie par un moteur électrique 41 alimenté par une batterie 40 et commandant un vérin 42 d'entraînement en va-et-vient de la fourche 20 par coulissement sur le mât de guidage 30. L'ensemble des autres organes du chariot 1 occupe une position prédéterminée dans le châssis 10, et seule la fourche 20 est entraînée en translation verticale, en position fonctionnelle, par le vérin 42.

Dans cet exemple, la liaison d'entraînement de la fourche 20 par le vérin 42- comporte un montage de type à moufle. Précisément, comme le montre la figure 4, le vérin 42 s'étend verticalement, parallèlement au mât 30, de façon adjacente à celui-ci. L'extrémité inférieure du vérin 42 est fixée au châssis 10, alors que son extrémité supérieure mobile porte un axe horizontal 32 d'une poulie 31 de renvoi (représentée dilatée) d'un lien souple 33.

Le lien souple 33, tel qu'un câble ou comme ici une chaîne portée par la poulie 31, relie la coulisse 26 à un point fixe 19 du châssis 10 situé ici au niveau du pied du mât 30. Le point fixe 19 pourrait être ailleurs, mais toujours avec un montage tel que le maintien de la chaîne 33 dans la gorge de la poulie 31 reste assuré sur toute la course du vérin 42. Ainsi, l'une des entretoises 60, par exemple l'entretoise 60 à mi-hauteur, peut comporter le point fixe 19.

Ainsi, dans cet exemple, le vérin 42 constitue en fait un mât porteur de longueur réglable, résistant à la compression due au poids de la charge, et déterminant la longueur du brin montant 34 de la chaîne 33, relié au châssis 10, ce qui détermine la longueur restante pour le brin complémentaire 35, descendant depuis la poulie 31 jusqu'à la fourche 20. Le mât 30 n'a ici qu'une fonction de guidage en coulissement de la fourche 20. C'est en effet le vérin 42 qui, par l'axe 32, supporte la charge de la palette. Le mât 30 peut toutefois aussi servir à assurer le maintien du vérin 42 dans la position dressée voulue, vérin 42 qui peut éventuellement être logé dans le mât 30, dans un canal laissé libre par la coulisse 26.

En variante, on notera cependant qu'il n'est pas obligatoire que l'axe 32 porté par le vérin 42 ait une course strictement parallèle au mât 30 et que la poulie 31 soit sensiblement disposée comme ici à la verticale du mât 30. En effet, il suffit que le brin descendant 35 soit toujours effectivement descendant, c'est-à-dire que la poulie 31 soit toujours située à un niveau supérieur à celui de la fourche 20, sans obligatoirement assurer une quasi verticalité au brin descendant 35. Le vérin 42 peut de même être incliné sur la verticale, et cela est aussi vrai pour le brin montant 34.

Toujours en variante, d'autres formes complémentaires, pour une coopération de coulissement entre le mât (30) et la coulisse (26), peuvent être prévues. Ainsi, dans une réalisation à inversion cinématique de la précédente, le mât (30), éventuellement plein ou toutefois fermé latéralement et par exemple circulaire avec un appendice arrière et/ou avant de rigidification (30A, 30B), pourrait coopérer par sa surface externe avec un collier ou pince ou un fourreau coulissant solidaire de la fourche 20.

L'effet de moufle, lié au déplacement vertical de l'axe 32, aboutit à un déplacement vertical de la fourche 20 de valeur double du changement de longueur du vérin 42. Ainsi, en position rétractée du vérin 42, la fourche 20 occupe sa position extrême basse au niveau du sol, avec un faible écart vertical de garde au sol pour éviter d'y racler. En position totalement déployée du vérin 42, le brin descendant 35 est de longueur quasiment nulle, c'est-à-dire que la fourche 20 est alors presque au niveau de la poulie 31. La course nécessaire du vérin 42, et donc la taille prévue pour celui-ci, est ainsi limitée, du fait de l'amplification d'un facteur 2 du déplacement de la fourche 20.

En variante, les organes d'entraînement comportent encore un vérin, s'étendant sensiblement parallèlement au mât 30, mais le vérin entraîne directement l'élément de coulissement 26, c'est-à-dire est en prise directe, pour le pousser vers le haut et pour le ramener vers le bas, ou simplement autoriser sa descente sous l'effet du poids de la fourche 20.

En variante, un montage à palan, c'est-à-dire à axe 32 de hauteur fixe, peut être envisagé.

De même, le mât 30, ici central, pourrait être décalé latéralement.

Le mât 30 peut constituer une sorte de bus, dans lequel sont logés tous les organes s'étendant verticalement.

Dans cet exemple, l'extrémité libre du mât 30 porte un pupitre vertical sensiblement plan 50 (fig. 1) monté rotatif, selon un axe vertical 61, par l'intermédiaire d'une équerre horizontale haute 62 de déport radial. La trajectoire du pupitre 50 est ainsi tangente à un cylindre fictif contenant totalement le mât 30, donc exempte de risque de collision avec celui-ci.

En variante de la figure 3, chaque galet 51 à 54, emprisonné dans l'un des C, est remplacé par une paire de galets espacés horizontalement dans un même plan latéral, prévus pour emprisonner un C, c'est-à-dire pour rouler sur des surfaces externes, mutuellement tournées à l'opposé vers respectivement l'avant 71AE, 71BE et l'arrière 72AE, 72BE, des branches avant 71A, 71B et arrière 72A, 72B du C considéré. La coulisse 26 est alors externe au mât 30 et constitue une sorte de collier ou paire de mâchoires. Les profilés 30A et 30B peuvent alors être disposés en appui mutuel par leurs tranches avant, et même y être fixés ensemble. Il peut être prévu que les raidisseurs-toiles formant appendice avant du mât 30, évoqués plus haut, s'étendent dans une fente verticale, par exemple dans la plan médian, du bras 27 de la fourche 20. La coulisse 26 avec le bras 27 présentent ainsi dans ce cas deux branches latérales, externes au mât 30, pour l'enserrer et sur lesquelles sont respectivement montés les galets 51, 52 et 53, 54. En variante encore, les C peuvent être ouverts vers l'extérieur du mât 30, pour recevoir les galets 51, 52 et 53, 54, montés sur les deux branches latérales ci-dessus.

De préférence comme ici, chaque profilé 30A, 30B est monobloc, c'est-à-dire en particulier que l'appendice 31A, 31B est monobloc avec la partie en C.

L'appendice 31A, 31B a ici une même section tout du long du mât 30.

Un carter arrière à extension verticale, non dessiné, recouvre les raidisseurs 31A, 31B et donc aussi les entretoises 60. Le vérin 42 peut être logé à l'intérieur de l'espace limité par les deux C, qui le protègent ainsi.

L'une des plaques entretoises 60, située ici à mi-hauteur du mât 30, sert ici de point d'accrochage fixe 19 du lien souple 33.

La partie intermédiaire de liaison 27 de la fourche 20 peut être fixée de façon amovible à la partie guidée 26, ce qui permet de remplacer la fourche 20 par un autre outil, tel que broche-éperon porte-bobine, porte bac ou autre.

La partie de liaison 27 de la fourche 20 peut, en variante, être formée ou comporter de deux voiles parallèles et espacés latéralement.

Le mât 30 comporte ici, en partie haute, un tablier arrière à section horizontale en U, formant capot de fermeture du mât 30. Le tablier est métallique et peut être fixé, par soudage ou autre, au reste du mât 30, ce qui augmente encore l'inertie mécanique de l'ensemble par rapport à la flexion vers l'avant.

On notera que les caractéristiques du mât 30 et des organes associés sont indépendantes de la nature de leur support, ici le châssis 10, et en particulier de sa mobilité. Le mât 30 et les organes associés pourraient donc, en variante, appartenir à un mécanisme de levage fixe ou monté sur un véhicule autre qu'un chariot de manutention.

## Revendications

1. Chariot de manutention de charges comportant un bâti (10), muni de moyens (11-16) d'appui stable au sol, comportant un outil mobile (20), de support d'une charge, comportant des moyens (25, 26) de guidage en translation sur un mât de guidage (30), sous l'action de moyens (31-35, 41, 42) d'entraînement en déplacement vertical, en fonctionnement, le mât (30) comportant deux glissières jumelées (30A, 30B) à section transversale présentant une forme sensiblement en "C", dont deux surfaces (71AI, 71BI, 71AE, 71BI et 72AI, 72BI, 72AE, 72BI) de branches opposées, respectivement avant (71A, 71B) et arrière (72A, 72B), constituent des pistes de guidage des moyens de guidage (25, 26) de l'outil (20), les deux branches (71A, 71B, 72A, 72B) de "C" se prolongeant par deux sections respectives d'un appendice raidisseur (31A, 31B) s'étendant sensiblement parallèlement à un plan médian du chariot, **caractérisé par le fait que** les deux appendices raidisseurs (31A, 31B) sont reliés ensemble par une pluralité d'entretoises mutuellement espacées (60).

2. Chariot selon la revendication 1, dans lequel les moyens d'entraînement comportent un lien souple (33), s'étendant sensiblement parallèlement au mât (30), de traction en soulèvement des moyens de guidage en translation (25, 26).

3. Chariot selon la revendication 2, dans lequel les moyens d'entraînement comportent une poulie (31) de renvoi du lien souple (33).

4. Chariot selon la revendication 3, dans lequel le lien souple (33) relie les moyens de guidage en translation (25, 26) à un point fixe (19) du bâti (10) et l'axe de la poulie de renvoi (31) est monté à une extrémité supérieure libre d'un vérin (42), de réglage de la hauteur de l'outil (20), à course sensiblement parallèle à une direction d'extension du mât (30).

5. Chariot selon la revendication 1, dans lequel les moyens d'entraînement comportent un vérin (42), s'étendant sensiblement parallèlement au mât (30), d'entraînement direct des moyens de coulissement (26).

6. Chariot selon la revendications 1 à 5, dans lequel les moyens (25, 26) de guidage de l'outil (20) sont reliés au reste de l'outil par une liaison (27) comportant deux voiles parallèles et espacés latéralement.

7. Chariot selon l'une des revendications 1 à 6, dans lequel le mât (30) s'étend sensiblement verticalement selon un plan longitudinal médian du chariot.

8. Chariot selon l'une des revendications 1 à 7, dans lequel un timon (17) de commande d'une roue directrice (15) est monté rotatif sur un palier (2) porté par un support de déport latéral (3) par rapport au mât (30).

9. Chariot selon l'une des revendications 1 à 8, dans lequel les pistes de guidage (71AI, 71BI, 72AI, 72BI) sont internes au mât (30).

10. Chariot selon l'une des revendications 1 à 8, dans lequel les pistes de guidage (71AE, 71BE, 72AE, 72BE) sont externes au mât (30)

11. Chariot selon l'une des revendications 1 à 10, dans lequel l'appendice raidisseur (31A, 31B) est monobloc avec le "C".

12. Chariot selon l'une des revendications 4 à 11, dans lequel l'une des entretoises (60) comporte ledit point fixe (19) pour le lien souple (33).

13. Chariot selon l'une des revendications 1 à 12, dans lequel l'appendice raidisseur (30A, 30B) s'étend dans une direction opposée à l'outil (20).

14. Chariot selon l'une des revendications 1 à 13, dans lequel un tablier arrière recouvre l'appendice raidisseur (30A, 30B).

15. Chariot selon l'une des revendications 2 à 14, dans lequel le mât (30) comporte un canal de passage du lien souple (33).

16. Chariot selon l'une des revendications 1 à 15, dans lequel le mât (30) constitue un canal de logement d'un vérin (42) des moyens d'entraînement (41, 42).

17. Chariot selon l'une des revendications 1 à 16, dans lequel le mât (30) porte un pupitre (50) monté rotatif.

18. Chariot selon l'une des revendications 1 à 17, dans lequel l'outil (20) est une fourche de transport de palettes.

## Claims

1. A load handling truck comprising a frame (10), having means (11-16) for stable support on the ground, comprising a movable tool (20), for supporting a load, comprising means (25, 26) for translational guidance on a guide mast (30), under the action of drive means (31-35, 41, 42) for vertical movement in operation, the mast (30) comprising two matching guide rails (30A, 30B) of substantially C-shaped cross section, of which two surfaces (71AI, 71BI, 71AE, 71BE and 72AI, 72BI, 72AE, 72BE) of opposite arms, front (71A, 71B) and back (72A, 72B), respectively, constitute guide tracks for the guidance means (25, 26) for the tool (20), the two "C" arms (71A, 71B, 72A, 72B) being extended by two respective sections of a stiffening appendage (31A, 31B) extending substantially parallel to a mid-plane of the truck, **characterized in that** the two stiffening appendages (31A, 31B) are connected together by a plurality of mutually spaced spacers (60).

2. A truck according to claim 1, in which the drive means comprise a flexible link (33), extending substantially parallel to the mast (30), for pulling on the translational guidance means (25, 26) to lift them.

3. A truck according to claim 2, in which the drive means comprise a deflection pulley (31) for the flexible link (33).

4. A truck according to claim 3, in which the flexible link (33) connects the translational guidance means (25, 26) to a fixed point (19) on the frame (10) and the axle of the deflection pulley (31) is mounted on an upper free end of a ram (42), for adjusting the height of the tool (20), which travels substantially parallel to a direction of extension of the mast (30).

5. A truck according to claim 1, in which the drive means comprise a ram (42), extending substantially parallel to the mast (30), which drives the slide means (26) directly.

6. A truck according to any of claims 1 to 5, in which the guidance means (25, 26) for the tool (20) are connected to the rest of the tool by a connection (27) comprising two parallel, laterally spaced webs.

7. A truck according to any of claims 1 to 6, in which the mast (30) extends substantially vertically in a longitudinal mid-plane of the truck.

8. A truck according to any of claims 1 to 7, in which a tiller (17) for operating a steerable wheel (15) is mounted rotatably on a bearing (2) borne by a support (3) which is laterally offset with respect to the mast (30).

9. A truck according to any of claims 1 to 8, in which the guide tracks (71AI, 71BI, 72AI, 72BI) are inside the mast (30).

10. A truck according to any of claims 1 to 8, in which the guide tracks (71AE, 71BE, 72AE, 72BE) are outside the mast (30).

11. A truck according to any of claims 1 to 10, in which the stiffening appendage (31A, 31B) forms a single piece with the "C".

12. A truck according to any of claims 4 to 11, in which one of the spacers (60) comprises the said fixed point (19) for the flexible link (33).

13. A truck according to any of claims 1 to 12, in which the stiffening appendage (30A, 30B) extends in a direction away from the tool (20).

14. A truck according to any of claims 1 to 13, in which a rear apron covers the stiffening appendage (30A, 30B).

15. A truck according to any of claims 2 to 14, in which the mast (30) comprises a channel for the passage of the flexible link (33).

16. A truck according to any of claims 1 to 15, in which the mast (30) constitutes a channel for housing a ram (42) of the drive means (41, 42).

17. A truck according to any of claims 1 to 16, in which the mast (30) bears a rotatably-mounted control panel (50).

18. A truck according to any of claims 1 to 17, in which the tool (20) is a fork for transporting pallets.

## Patentansprüche

1. Wagen zur Beförderung einer Last umfassend ein Gestell (10), das mit Stützmitteln (11-16) zur stabilen Stützung an Boden versehen ist, umfassend ein mobiles Werkzeug (20) zur Unterstützung einer Last, umfassend Mittel (25. 26) zur Führung einer Translation entlang eines Führungsmastes (30), die, bei Betrieb, durch Antriebsmittel (31-35, 41, 42) zur vertikalen Bewegung bewirkt wird, wobei der Mast (30) zwei paarweise angeordnete Führungsschienen (30A, 30B) aufweist, deren jeweiliger Querschnitt im Wesentlichen die Form eines "C" aufweist, wobei zwei Flächen (71AI, 71BI, 71AE, 71BE und 72AI, 72BI, 72AE, 72BE) gegenüber liegender Vorder- (71A, 71 B) bzw. Hinterwangen (72A, 72B) Führungsbahnen der Führungsmittel (25, 26) des Werkzeugs (20) bilden, wobei die zwei Wangen (71A, 71 B, 72A, 72B) des "C" durch zwei korrespondierende Abschnitte eines Versteifungsfortsatzes (31A, 31 B) verlängert sind, die im Wesentlichen parallel zu einer Mittelebene des Wagens verlaufen, **dadurch gekennzeichnet, dass** die zwei Versteifungsfortsätze (31A, 31 B) durch eine Vielzahl voneinander beabstandeter Abstandshalter (60) miteinander verbunden sind.

2. Wagen gemäß Anspruch 1, wobei die Antriebsmittel eine flexible Verbindung (33) aufweisen, die im Wesentlichen parallel zum Mast (30) verläuft, zur Anhebetraktion der Mittel (25, 26) zur Führung einer Translation

3. Wagen gemäß Anspruch 2, wobei die Antriebsmittel eine Umlenkrolle (31) für die flexible Verbindung (33) umfassen.

4. Wagen gemäß Anspruch 3, wobei die flexible Verknüpfung (33) die Mittel (25, 26) zur Führung einer Translation mit einem Fixpunkt (19) des Gestells (10) verbindet und die Achse der Umlenkrolle (31) an einem freien oberen Ende einer Winde (42) montiert ist, zur Einstellung der Höhe des Werkzeugs (20), wobei ein Windenhub im Wesentlichen parallel zu einer Ausstreckungsrichtung des Mastes (30) verläuft.

5. Wagen gemäß Anspruch 1, wobei die Antriebsmittel eine Winde (42) umfassen, die im Wesentlichen parallel zum Mast (30) verläuft, zum direkten Antrieb der Mittel (26) zur Führung einer Translation.

6. Wagen gemäß eines der Ansprüche 1 bis 5, wobei die Mittel (25, 26) zur Führung einer Translation des Werkzeugs (20) mit dem Rest des Werkzeugs durch eine Verbindung (27) verbunden sind, die zwei parallele und seitlich beabstandete Schäle umfasst.

7. Wagen gemäß eines der Ansprüche 1 bis 6, wobei der Mast (30) im Wesentlichen vertikal entlang einer Mittelebene des Wagens verläuft.

8. Wagen gemäß eines der Ansprüche 1 bis 7, wobei eine Steuerungsdeichsel (17) eines leitenden Rads (15) schwenkbar auf einem Lager (2) gelagert ist, das von einem Träger (3) gestützt ist, der vom Mast (30) seitlich verschoben ist.

9. Wagen gemäß eines der Ansprüche 1 bis 8, wobei die Führungsbahnen (71 AI, 71 BI, 72AI, 72BI) innerhalb des Mastes (30) angeordnet sind.

10. Wagen gemäß eines der Ansprüche 1 bis 8, wobei die Führungsbahnen (71AE, 71 BE, 72AE, 72BE) außerhalb des Mastes (30) angeordnet sind.

11. Wagen gemäß eines der Ansprüche 1 bis 10, wobei der Versteifungsfortsatz (31A, 31B) mit dem "C" einstückig ausgeführt ist.

12. Wagen gemäß eines der Ansprüche 4 bis 11, wobei einer der Abstandshalter (60) den Fixunkt (19) für die flexible Verbindung (33) umfasst.

13. Wagen gemäß eines der Ansprüche 1 bis 12, wobei der Versteifungsfortsatz (30A, 30B) in einer dem Werkzeug (20) entgegengesetzten Richtung verläuft.

14. Wagen gemäß eines der Ansprüche 1 bis 13, wobei ein Hinterschutzdeckel den Versteifungsfortsatz (30A, 30B) umhüllt.

15. Wagen gemäß eines der Ansprüche 2 bis 14, wobei der Mast (30) einen Kanal zum Durchlass der flexiblen Verbindung (33) umfasst.

16. Wagen gemäß eines der Ansprüche 1 bis 15, wobei der Mast (30) einen Kanal zur Unterbringung einer Winde (42) der Antriebsmittel (41, 42) bildet.

17. Wagen gemäß eines der Ansprüche 1 bis 16, wobei der Mast (30) ein schwenkbar gelagertes Pult (50) trägt.

18. Wagen gemäß eines der Ansprüche 1 bis 17, wobei das Werkzeug (20) eine Gabel zur Beförderung von Paletten ist.
